# EUROPEAN PATENT APPLICATION

(11) **EP 1 557 488 A1**
(43) Date of publication of application: **27.07.2005**
(21) Application number: 04255702.5
(22) Date of filing: 20.09.2004
(51) Int. Cl.: D06F 58/20

(54) **Clothing dryer**

(30) Priority: 20.01.2004 KR 2004004094
(71) Applicant: Samsung Electronics Co., Ltd., Suwon-si, Gyeonggi-do 442-742 (KR)
(72) Inventor: Lee, Jung Ho, Gangnam-Gu Seoul (KR)
(74) Representative: Brandon, Paul Laurence

(57) **Abstract**

A clothing dryer in which hot air to be supplied into a drum (20) has a uniform temperature distribution over a flow section thereof, thereby being capable of obtaining an enhancement in drying efficiency while preventing clothing contained in the drum (20) from being damaged by the hot air. The clothing dryer includes a drum (20) to receive clothes to be dried, a heating duct (30) to generate hot air to be supplied into the drum (20), a hot air duct (40) to guide the hot air generated from the heating duct (30) to the drum (20), and a vortex generating blade (60) to generate a vortex flow in air passing through the hot air duct (40).

## Description

The present invention relates to clothing dryers.

Generally, a clothing dryer includes a housing, a drum installed in the housing to receive clothing to be dried, a heating duct to generate hot air to be supplied into the drum, a hot air duct to guide the hot air generated from the heating duct to the drum, and an exhaust duct to discharge the exhausted hot air, after circulating within the drum, out of the housing.

The drum is rotatably installed in the housing. A blowing fan to generate a force causing the hot air to flow is installed in an intermediate portion of the exhaust duct. Both the drum and the blowing fan are driven by a drive motor. The clothing received in the drum is dried as the drum and blowing fan operate.

Hot air generated in the heating duct is supplied into the drum after passing through the hot air duct. In a conventional clothing dryer, however, the hot air to be supplied into the drum has a non-uniform temperature distribution over a flow section thereof, so that the clothing may be unevenly dried. As a result, there is degradation in drying efficiency. Where hot air, locally exhibiting a very high temperature comes into contact with the clothing, damage to the clothing may occur.

Thus, an aim of preferred embodiments of the present invention provides a clothing dryer in which hot air, to be supplied into a drum, has a uniform temperature distribution over a flow section thereof, so that the temperature of the hot air is not excessively high at any particular location. Thus, the clothing dryer is capable of drying efficiently while reducing the risk of clothing contained in the drum from being damaged by the hot air.

Accordingly the clothing dryer of the present invention, comprises a drum to receive clothes to be dried; a heating duct to generate hot air to be supplied into the drum; a hot air duct to guide the hot air generated from the heating duct to the drum; and at least one vortex generating blade adapted to generate a vortex flow in air passing through the hot air duct.

Suitably, the vortex generating blade is arranged to be inclined with respect to a longitudinal direction of the hot air duct.

Suitably, the vortex generating blade has a height which increases gradually as the blade extends downstream in an air flow direction in the hot air duct.

Suitably, the at least one vortex generating blade comprises a plurality of vortex generating blades.

Suitably, the plurality of vortex generating blades comprises at least one pair of vortex generating blades arranged in the hot air duct such that the vortex generating blades in each vortex generating blade pair are inclined with respect to the longitudinal direction of the hot air duct in opposite directions, respectively.

Further features of the present invention are set out in the appended claims.

The present invention will become apparent and more readily appreciated from the following description of the embodiments, by way of example only, taken in conjunction with the accompanying drawings of which:
FIG. 1 is a front view illustrating a clothing dryer according to the present invention;
FIG. 2 is a sectional view of the clothing dryer shown in FIG. 1;
FIG. 3 is a perspective view partially illustrating a hot air duct included in the clothing dryer in accordance with an embodiment of the present invention;
FIG. 4 is a perspective view partially illustrating a hot air duct included in the clothing dryer in accordance with another embodiment of the present invention; and
FIG. 5 is a cross-sectional view taken along the line I - I of FIG. 4.

Reference will now be made in detail to the embodiments of the present invention, examples of which are illustrated in the accompanying drawings, wherein like reference numerals refer to the like elements throughout. The embodiments are described below to explain the present invention by referring to the figures.

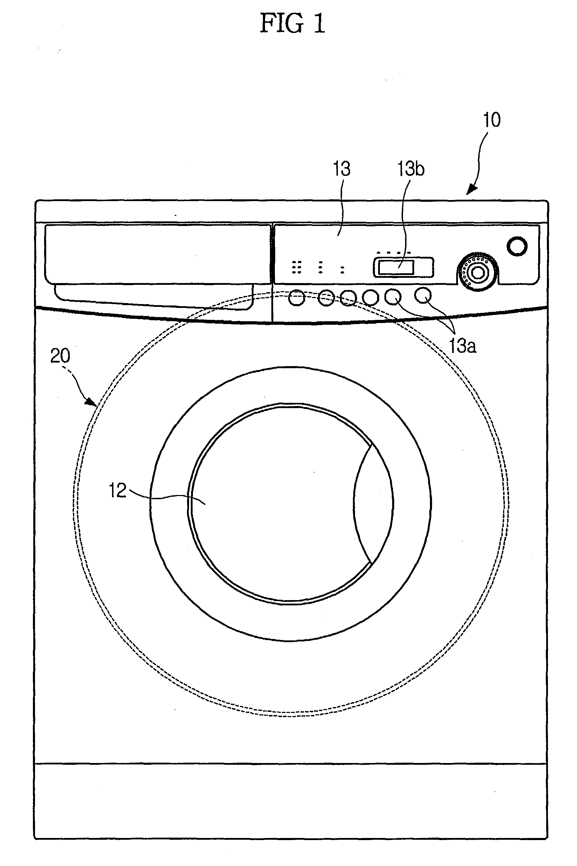

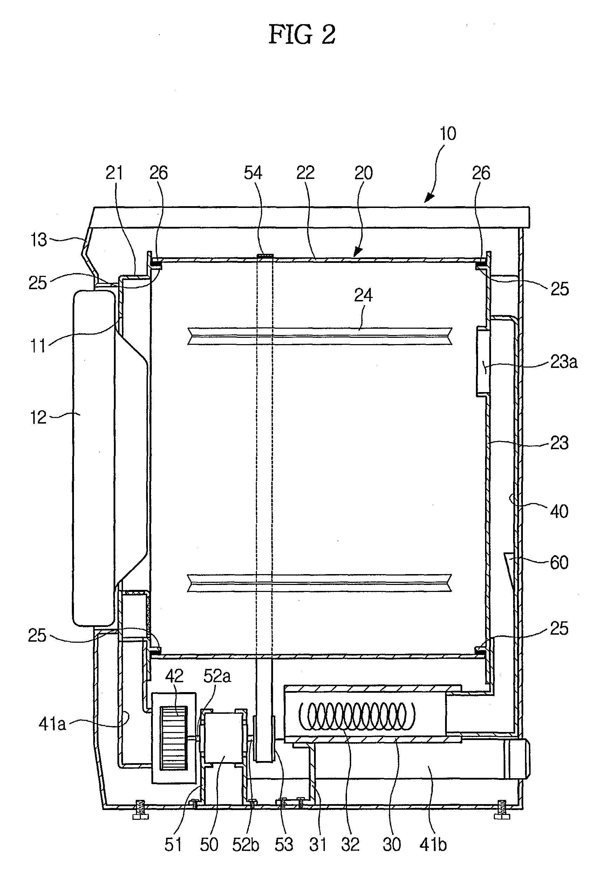

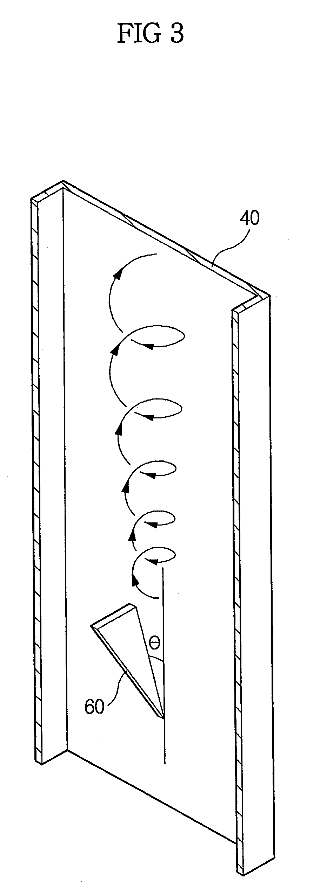

FIG. 1 is a front view illustrating a clothing dryer according to the present invention. FIG. 2 is a sectional view of the clothing dryer shown in FIG. 1. FIG. 3 is a perspective view partially illustrating a hot air duct included in the clothing dryer in accordance with an embodiment of the present invention.

As shown in FIGS. 1 to 3, the clothing dryer includes a housing 10 having the appearance of a clothing dryer, a cylindrical drum 20, installed in the housing 10, to receive clothing to be dried, a heating duct 30 to generate hot air to be supplied into the cylindrical drum 20, a hot air duct 40 to guide the hot air generated from the heating duct 30 to the cylindrical drum 20, and exhaust ducts 41a and 41b to discharge the hot air from out of the housing 10, after the hot air circulates inside the rotating drum 20.

The housing 10 has a substantially rectangular parallelepiped structure at a front wall of the housing, the housing 10 includes a centrally provided access opening 11, through which clothing, to be dried, is placed into the cylindrical drum 20 or from which, clothing which has already been dried, is taken out of the cylindrical drum 20. A door 12 is hingably coupled to the front wall of the housing 10 such that the door 12 opens and closes the access opening 11. A control panel 13 is provided at an upper portion of the front wall of the housing 10. The control panel 13 includes operating buttons 13a to control operations of driving elements included in the clothing dryer, respectively, and a display 13b to display the operations of the driving elements.

The drum 20 includes a centrally provided front wall 21 having an opening facing the access opening 11 in an aligned state, a front wall 23 arranged at a rear portion of the housing 10. The drum further includes, at an upper portion thereof, a hot air inlet 23a, and a peripheral wall 22 rotatably arranged between the front and rear walls 21 and 23. Lifters 24 are included at an inner surface of the peripheral wall 22 such that they are radially inwardly protruded while extending in a longitudinal direction of the peripheral wall 22. The lifters 24 serve to raise clothing contained in the drum 20 to the top of the peripheral wall 22, and then to release the clothing to cause the clothing to be dropped to the bottom of the peripheral wall 22, in accordance with rotation of the peripheral wall 22, thereby causing the clothing to be uniformly stirred, and thus, to be uniformly dried.

The peripheral wall 22 is fitted, at opposite ends thereof, around annular support members 25 protruded from respective inner surfaces of the front and rear walls 21 and 23 toward the interior of the drum 20. A slip pad 26 is interposed between each support member 25 and the associated end of the peripheral wall 22, in order to allow the peripheral wall 22 to smoothly slip along the support member 25 during a rotation thereof.

The heating duct 30 is arranged beneath the drum 20 such that the heating duct 30 extends in the longitudinal direction of the drum 20. The heating duct 30 has a front portion, which is supported by a support bracket 31 fixedly mounted to a bottom wall of the housing 10. A heater 32 is arranged in the interior of the heating duct 30 to heat air, which is introduced from the interior of the housing 10, into the heating duct 30. Hot air generated in the heating duct 30 is guided into the drum 20 by the hot air duct 40, which allows the heating duct 30 to communicate with the drum 20. The hot air supplied into the drum 20 evaporates moisture contained in the clothing, and then exits the housing 10 after passing through the exhaust ducts 41a and 41b. The exhaust duct 41a is connected to a lower portion of the front wall 21 of the drum 20 while extending along the bottom wall of the housing 10 by a certain length. The exhaust duct 41b is connected to the exhaust duct 41a while extending along the bottom wall of the housing 10 so that the exhaust duct 41b is opened to the outside of the housing 10. A blowing fan 42 is included between the exhaust ducts 41a and 41b to generate a flow force required to suck and discharge the hot air.

A drive motor 50 is mounted to a motor bracket 51 fixedly mounted to the bottom wall of the housing 10. The drive motor 50 transmits a rotating force to both the blowing fan 42 and the peripheral wall 22 of the drum 20. To this end, the drive motor 50 includes drive shafts 52a and 52b extending from a motor body in opposite longitudinal directions. That is, the drive shaft 52a extends in a forward direction from the drive rotor 50 and the drive shaft 52b extends in a rearward direction from the drive motor 50. The blowing fan 42 is directly connected to the drive shaft 52a, which extends forwardly from the drive motor 50. A pulley 53, to drive the peripheral wall 22 of the drum 20, is fixedly mounted to the drive shaft 52b, which extends rearwardly from the drive motor 50. The pulley 53 is connected to the peripheral wall 22 of the drum 20 via a belt 54. Accordingly, the rotating force from the drive motor 50 is transmitted to the peripheral wall 22 of the drum 20 via the pulley 53 and belt 54. Thus, the blowing fan 42 and the peripheral wall 22 of the drum 20 can be simultaneously rotated by the drive motor 50.

Meanwhile, the hot air duct 40 has a rectangular cross-sectional shape while being vertically elongated. A vortex generating blade 60 is provided at an inner surface of the hot air duct 40 to generate a vortex flow in air passing through the hot air duct 40. The vortex generating blade 60 has a right-angled triangular shape. The right angled triangular shape allows one of the sides of the vortex generating blade 60, to define a right angle with the surface of the hot air duct 40. This side is then arranged downstream from the other sides of the vortex generating blade 60 in an air flow direction in the hot air duct 40 while laterally extending perpendicular to the air flow direction from the surface of the hot air duct 40. Here, another one of the sides is attached to the inner surface of the hot air duct 40 and is inclined from the longitudinal direction of the hot air duct 40. In accordance with this structure, the vortex generating blade 60 changes the flow direction of air passing through the hot air duct 40 in the longitudinal direction of the hot air duct 40, thereby generating a vortex flow of air.

In an embodiment of the invention, to prevent the vortex generating blade 60 from exhibiting a high flow resistance, the inclination angle of the vortex generating blade 60, with respect to the longitudinal direction of the hot air duct 40, that is, θ in FIG. 3, is prevented from being excessively large. Indeed, in an embodiment of the invention this angle is maximally 60 degrees from the longitudinal direction of the hot air flow.

In one embodiment of the invention, the vortex generating blade 60 has a height from the surface of the hot air duct 40, which gradually increases as the vortex generating blade 60 extends downstream in the air flow direction. With this structure, it is possible to gradually change the flow direction of air in the hot air duct 40 without any considerable flow resistance.

Operation of the clothing dryer according to this embodiment of the present invention will now be described.

When the user initially operates the clothing dryer by operating the control panel 13 after putting clothing, to be dried, into the drum 20, power is applied to the drive motor 50, so that the drum 20 and blowing fan 42 are simultaneously rotated. That is, in accordance with the operation of the drive motor, the pulley 53 is rotated by the drive shaft 52b extending rearwardly from the drive motor 50, so that the peripheral wall 22 of the drum 20, which is connected to the pulley 53 via the belt 54, is rotated along with the pulley 53. As the peripheral wall 22 of the drum 20 rotates, the clothing received in the drum 20 is uniformly stirred while repeatedly rising and falling by virtue of the lifters 24. Accordingly, an enhancement in drying effect can be obtained.

On the other hand, the rotation of the blowing fan 42 generates a force causing air to flow. As a result, a flow of air is formed which passes through the heating duct 30, hot air duct 40, drum 20, and exhaust ducts 41a and 41b in a substantially sequential fashion. The air passing through the heating duct 30 increases in temperature in accordance with a heating operation of the heater 32 installed in the heating duct 30. This hot air is supplied into the drum 20 after passing through the hot air duct 40. In the drum 20, the hot air dries the clothing containing moisture. The hot air is then discharged from the drum 20 to the outside of the housing 10 via the exhaust duct 41a and 41b.

Meanwhile, the air introduced into the hot air duct 40 is changed in flow direction while passing the vortex generating blade 60, so that a vortex flow is generated downstream from the vortex generating blade 60. By virtue of this vortex flow, the air flowing through the hot air duct 40 is stirred. The stirring of the hot air results in the air having a uniform temperature distribution over a flow section thereof.

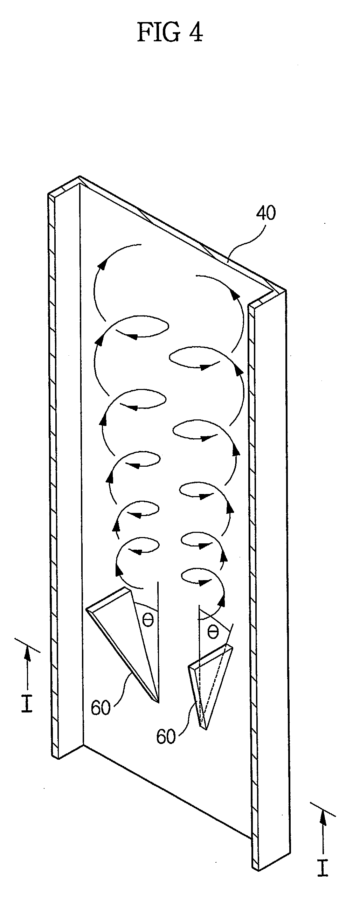

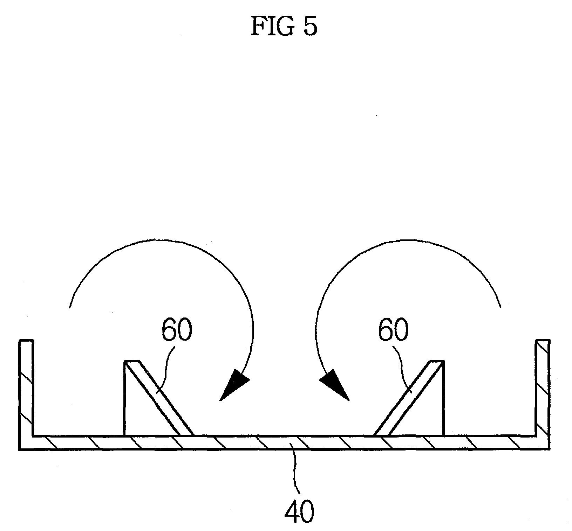

FIGS. 4 and 5 illustrate a hot air duct included in the clothing dryer in accordance with another embodiment of the present invention. In FIGS. 4 and 5, the hot air duct is designated by the same reference numeral as that of FIG. 3, that is, reference numeral 40. In accordance with this embodiment of the invention, a plurality of vortex generating blades 60 are installed in the hot air duct 40, in order to increase the generation of a vortex flow in the hot air duct 40. In the illustrated case, a pair of vortex generating blades 60 are arranged such that they are inclined with respect to the longitudinal direction of the hot air duct 40 in opposite directions, respectively. With this arrangement, vortex flows generated by the vortex generating blades 60 are upwardly or downwardly moved in the same fashion at a central region of the section of the hot air duct 40. Accordingly, it is possible to minimize flow friction occurring between the vortex flows generated by respective vortex generating blades 60.

As is apparent from the above description, the clothing dryer according to preferred embodiments of the present invention include a vortex flow generating blade or blades installed in the hot air duct, so that hot air to be supplied into the cylindrical drum has a uniform temperature distribution over a flow section thereof, thereby being capable of obtaining a high drying efficiency while preventing clothing from being damaged due to hot air locally exhibiting a high temperature at a portion of a flow section thereof.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A clothing dryer comprising:
a drum (20) to receive clothes to be dried;
a heating duct (30) to generate hot air to be supplied into the drum (20);
a hot air duct (40) to guide the hot air generated from the heating duct (30) to the drum (20); and
at least one vortex generating blade (60) to generate a vortex flow in air passing through the hot air duct (40).

2. The clothing dryer according to claim 1, wherein the vortex generating blade (60) is inclined with respect to a longitudinal direction of the hot air duct (40).

3. The clothing dryer according to claim 1 or claim 2, wherein the vortex generating blade (60) has a height which increases gradually as the vortex generating blade (60) extends downstream in an air flow direction in the hot air duct (40).

4. The clothing dryer according to any preceding claim, wherein the at least one vortex generating blade (60) comprises a plurality of vortex generating blades (60).

5. The clothing dryer according to claim 4, wherein the plurality of vortex generating blades (60) comprises at least one pair of vortex generating blades (60) arranged in the hot air duct (40) such that the vortex generating blades in each vortex generating blade (60) pair are inclined with respect to the longitudinal direction of the hot air duct (40) in opposite directions, respectively.

6. A dryer, including a drum (20) to receive clothes to be dried, comprising
a heating duct (30) to generate hot air to be supplied into the drum (20);
a hot air duct (40) to guide the hot air, which is generated from the heating duct (30) to the drum (20); and
a vortex generating blade (60) to generate a vortex in the air passing through the hot air duct (40).

7. The dryer according to claim 6, wherein the hot air duct (40) has a substantially rectangular cross sectional shape.

8. The dryer according to claim 6, wherein the hot air duct (40) comprises an inner surface from which the vortex generating blade (60) extends.

9. The dryer according to claim 8, wherein the vortex generating blade (60) has a substantially right angled triangular shape.

10. The dryer according to claim 9, wherein the vortex generating blade (60) comprises a first side, which is attached to the inner surface of the hot air duct (40) along substantially the entire length of the first side, and which is inclined from the longitudinal direction of the hot air flow.

11. The dryer according to claim 10, wherein an angle of the inclination of the first side from the longitudinal direction of the air flow in the hot air duct (40) is sufficiently small to prevent the vortex generating blade (60) from exhibiting a high flow resistance.

12. The dryer according to claim 11, wherein the vortex generating blade (60) comprises a second side which slopes away from the inner surface of the hot air duct (40) in the direction of the longitudinal direction of the hot air flow in the hot air duct (40).

13. The dryer according to claim 12, wherein the vortex generating blade (60) comprises a third side which forms a right angle with the inner surface of the hot air duct (40) .

14. The dryer according to any one of claims 9-13, wherein the direction of the hot air flow may be changed without considerable flow resistance.

15. The dryer according to any one of claims 9-14, wherein the vortex generating blade (60) is plural in number.

16. The dryer according to claim 15, wherein the plurality of vortex generating blades (60) comprise a pair of vortex generating blades (60) which are inclined in opposite directions from each other with respect to a longitudinal direction of the hot air flow in the hot air duct (40).

17. A dryer, including a drum (20) to receive clothes to be dried, comprising
a heating duct to generate hot air to be supplied into the drum;
a hot air duct to guide the hot air, which is generated from the heating duct to the cylindrical drum; and
a blade to generate an even flow of hot air passing through the hot air duct.

18. The dryer according to claim 17, wherein the hot air duct (40) has a substantially rectangular cross sectional shape.

19. The dryer according to claim 17, wherein the hot air duct (40) comprises an inner surface from which the blade (60) extends.

20. The dryer according to claim 17, wherein the blade (60) is plural in number, and comprises a pair of blades (60) which are inclined in opposite directions from each other with respect to a longitudinal direction of the hot air flow in the hot air duct (40).

21. A dryer, including a drum (20) to receive clothes to be dried, comprising
means (30) for generating hot air to be supplied into the drum;
means (40) for guiding the hot air, which is generated from the hot air generating means (30) to the drum (20); and
means (60) for generating an even flow of the hot air passing through the hot air guiding means (40).
